# EUROPEAN PATENT SPECIFICATION

(11) **EP 0 262 301 B1**
(45) Date of publication and mention of the grant of the patent: **03.03.1993**
(21) Application number: 87108182.4
(22) Date of filing: 05.06.1987
(51) Int. Cl.: G06F 12/08, G06F 12/12

(54) **Paging supervisor**
Seitenaustauschsupervisor
Superviseur de pagination

(30) Priority: 27.06.1986 US 879675; 04.05.1987 US 44121
(43) Date of publication of application: 06.04.1988
(73) Proprietor: International Business Machines Corporation, Armonk, N.Y. 10504 (US)
(72) Inventor: O'Quin, John Claude, III, Austin Texas 78731 (US)
(74) Representative: Bailey, Geoffrey Alan

(56) References cited:
- EP-A- 0 062 175
- IBM TECHNICAL DISCLOSURE BULLETIN, vol. 15, no. 12, May 1973, pages 3803-3805, New York, US; C. HIA et al.: "Replacement algorithm using priority class structure"

## Description

The present invention relates to paging in cached data processing apparatus and provides a new data attribute, volatile storage, for computer systems with virtual storage. Volatile storage contains data that are not swapped out to secondary storage. For many applications this is a useful feature which can result in reduced system overhead.

Virtual storage extends the power of computer storage by expanding the number of storage addresses that can be represented in a system while relaxing the limitation that all addressable storage must be present in the computer's main store. The address translation hardware employed for such virtual storage requires page tables fixed in real memory to perform its function. The size of a conventional page table is proportional to the size of the virtual address space, placing a practical limit on the address space size.

Paged segmentation is a means of reducing this overhead. It takes advantage of the grouping of related data in virtual storage by representing page table data separately for each segment. This allows space to be saved for short or unused segments of the address space.

An inverted page table further expands the range of addressability by reducing the real storage overhead required to support a very large virtual address space. Since an inverted page table contains an entry for each page of real memory, its overhead is proportional to physical rather than virtual memory size. This is possible because the address translation hardware needs only the location of pages that are present in real memory. If a page is not present, the hardware must detect this fact, but it does not require the backing store address.

The operating system's paging supervisor program does need this information, but appropriate coding techniques can allow this program to take page faults when accessing the external page tables which describe the backing store mapping for each virtual page. Thus, the external page tables need not be fixed or pinned in real storage. The frequency with which these tables are referenced will cause them to occupy some fraction of real memory, however. Furthermore, the presence of external page tables in the virtual address space requires additional external page table entries for each page containing external page table data. Ultimately, at least one external page table must be pinned to avoid infinite recursion in the paging supervisor.

The richness of the addressing resource provided using the inverted page table approach simplifies storage management in most software. Both application and system routines can be coded using safe, straightforward data structures. Large arrays, which can be allocated statically at compile time, are particularly useful for representing the objects being processed. Data represented in this manner can be accessed very efficiently, while compiler range checking easily ensures that no other data are accidentally modified. The requirement that the data structure be bounded is frequently not a problem, since reasonable limits may be imposed by the size of the application that can feasibly be attempted, and because the cost of providing a large virtual extent is quite modest. As long as the program is coded not to touch storage containing unused array entries, no real storage will be allocated.

Many machines with virtual memory support provide hardware bits that record references and changes to each page. The change bit is set on any store into the page, while the reference bit is set on any access (load or store). A page that has not been written into since it was read from secondary storage will have a zero change bit. A page in this state is said to be "clean". When the in-storage copy of the page is modified, the change bit is set and the page becomes "dirty". Dirty pages must be written back to secondary storage before they can be replaced for other uses, whereas clean pages are immediately available.

Having a very large range of addresses makes it feasible to map a system's entire database using a single set of virtual addresses. This data management technique is sometimes known as a one-level store. In a one-level store each segment must be large enough to represent an entire file or collection of data. Segment numbers may be permanently assigned to each file, or they may be assigned when the file is opened. The primary advantage of this reusable virtual address approach is that a much smaller segment table is needed, eliminating the complexities introduced when the segment table must be paged. To resolve segment names when a file is opened, a conventional file system directory must be maintained. This provides a convenient place to keep user authorisation and access rights.

If a one-level store is provided by the system, then it is possible to support the persistent storage class. This is a powerful high-level language data abstraction that provides direct access to file-system segments. Any data structure can be declared to have the attribute "persistent". Once a persistent data item has been opened, it can be addressed in the same manner as any other variable in the program. Variables in the persistent data structure retain the values they had the last time they were committed. New values can be assigned and these changes committed or abandoned, as needed. Before a persistent segment can be addressed, it must be opened, binding the segment identified to a specific name in the file system. Various sharing, locking, and data integrity checks can be made when the variable is opened. The persistent data attribute is a useful generalisation of conventional file access methods.

Examples of prior art machines are EP-A-0062175 and IBM TECHNICAL DISCLOSURE BULLETIN, vol. 15, no. 12, May 1973, pages 3803-3805, New York, US; C. HIA et al.: "Replacement algorithm using priority class structure"

According to the present invention, there is provided data processing apparatus having a cache, comprising a finite set of page frames, and backing storage between which pages of data are paged under the control of a paging supervisor which, inter alia, maintains an inverted page table defining which pages reside in which page frames, a free list of which page frames are available to receive non-resident requested pages and a record of control data indicating the activity that has taken place with respect to each resident page and which supervisor performs on the basis of the control data a cyclic housekeeping function on the cache to determine, in a first cycle, which resident pages are inactive in that they have not been referenced since last inspected and, of these, which inactive pages have been rendered dirty by being written into, and, in a second cycle, to update the corresponding copies of dirty inactive pages in backing storage and thereafter to transfer the corresponding page frames to the free list, page frames determined to contain clean inactive pages being available for immediate transfer to the free list, wherein means are provided for designating that pages in identified page frames are volatile when said pages are no longer required, the paging supervisor being responsive to such designations to remove all control data relative to such pages from the inverted page table without adding the corresponding page frames to the free list and without updating the corresponding copies thereof in backing storage.

One or more pages of virtual storage may be said to be "volatile" if they exist only while in primary memory. When a volatile page is selected for replacement, it is released rather than being swapped out to secondary storage. This is the feature that gives the volatile store of the present invention its name: if a page remains unused for too long, it will "evaporate".

For most applications, there must be some assurance that pages currently being accessed do not disappear while updates are being made, Although the system is unlikely to select currently active pages for replacement, the program must work correctly even in situations where higher-priority tasks may pre-empt its real storage resources.

Accordingly, the paging supervisor can be arranged to progress volatile pages from active to inactive in a first housekeeping cycle and to remove all references to inactive volatile pages in a second housekeeping cycle and means provided for restoring referenced volatile active or inactive pages to the dirty active state and for restoring inactive volatile pages to the active volatile state if again specifically designated volatile.

Most systems use page replacement schemes based on hardware reference bits, which do not guarantee that the most recently referenced volatile page will remain in real storage. These reference bits provide a good solution to the problem, however. When the application references a page, it becomes implicitly non-volatile until explicitly made volatile by a "vrelease". If a page that has been referenced but not released is selected for pageout, it must be copied to secondary storage. As long as the application vreleases its pages, it will gain the performance advantage of volatile storage. Pages which are not vreleased will behave like ordinary virtual memory. The application can rely on pages being updated to remain intact. It explicitly vreleases pages that are not needed immediately, declaring that it is willing to regenerate the page, if necessary.

When a page or segment is declared to be volatile, the program making the request may declare an entry point to perform a pseudo pagein operation. When an unmapped volatile page is referenced, the paging supervisor allocates an empty frame and calls the pseudo pagein routine to initialise it to whatever empty state is desired by the program. This may be implemented by signalling the task or by sending a message to some designated process.

Since the paging supervisor is usually required to zero newly allocated frames to preserve data security, some applications may not need a pseudo pagein handler because a zero field can be used to detect when a newly allocated page is being processed.

The present invention will be described further by way of example with reference to an embodiment thereof as illustrated, together with an example of a prior art arrangement, in the accompanying drawings in which:-
FIGURE 1 is a diagram showing the usual transitions between states for a virtual storage pages in the prior art example; and
FIGURE 2 is a diagram showing these states and transitions, together with the additional volatile page states and transitions of the embodiment of the present invention.

The described paging arrangement is useful in a computer system such as described in the article "Design Of The IBM RT PC Virtual Memory Manager" by J. C. O'Quin, J. T. O'Quin, Mark D. Rogers and T. A. Smith appearing in the publication "IBM RT Personal Computer Technology", 1986, IBM Form No. SA 23-1057. That article, including the references cited therein, is incorporated herein by reference.

### Page Replacement -- The "Clock" Algorithm

When a page is in main storage, it resides in a page frame, a buffer capable of holding a single page. The page replacement algorithm determines which pages to replace when new page frames are needed. What is now to be described is an extension to the clock page replacement algorithm, which is also commonly known as second chance. The standard version of this algorithm uses the hardware reference bits to detect pages that have been inactive since the last time their page frames were scanned. For example:

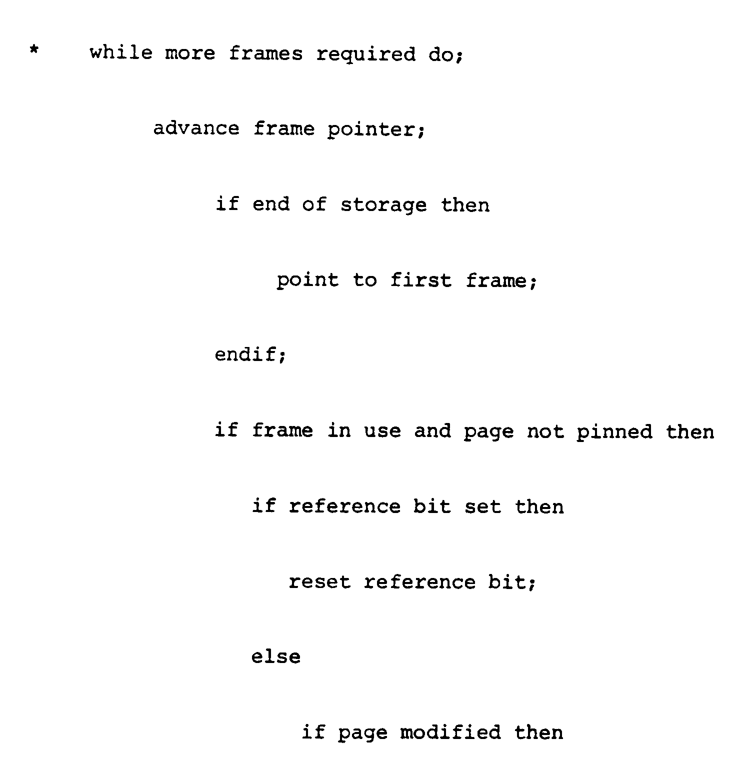

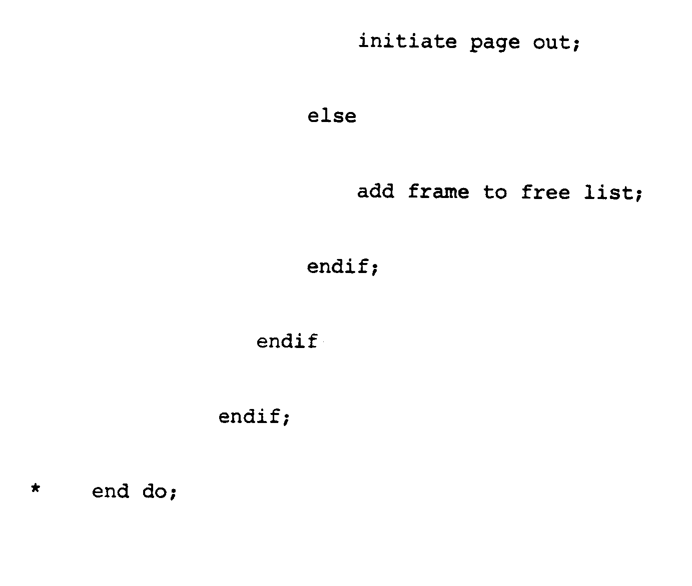

### Page States

One way of describing a paging subsystem is to describe its page states. Each page must always be found in a well-defined state, so any operations that cannot be performed within a single paging subsystem critical section will tend to require additional page states. A typical paging subsystem using the clock algorithm and keeping a free list of frames available for immediate replacement, might consider the following states significant:
1. UR -- unreferenced
2. DA -- dirty, active
3. DI -- dirty, inactive
4. PO -- page out
5. SS -- in secondary storage
6. PI -- page in
7. CA -- clean, active
8. CI -- clean, inactive
9. FR -- free

New pages, which have never been referenced, are in the UR state. When the first reference occurs, a page frame is allocated, and initialised to zeros by the paging subsystem. This destroys any other user's data and sets the change bit, so the page is in the DA state. There is no valid copy in secondary storage.

Whenever a DA page is noticed by the clock algorithm, its reference bit is reset, putting it in the DI state. As long as the page is referenced again before the next clock cycle, it will return to the DA state and remain in storage. If a DI page has not been referenced for a full cycle of the clock, it is selected for replacement. Since the page is dirty, it must be written to secondary storage before being reallocated. During this I/O operation, the page is in the PO stage. When the I/O operation is completed, the page is added to the free list from which pages are selected for replacement. FR pages that are replaced no longer have a frame assigned. Since the only copy is on secondary storage, their state is SS.

When an SS page is referenced, a free frame is assigned, and a read from secondary storage is initiated. During this operation the page is in the PI state. When the read completes, the page goes to the CA state and is ready for use. CA pages age to the CI state when seen by the clock algorithm. As long as they are used again within the next clock cycle, they become CA again. If the reference was a store, the page becomes DA instead. If a CI page goes unreferenced for an entire clock cycle, it is placed on the free list immediately. Since the page is clean, there is already a valid secondary storage copy, so no page out is required.

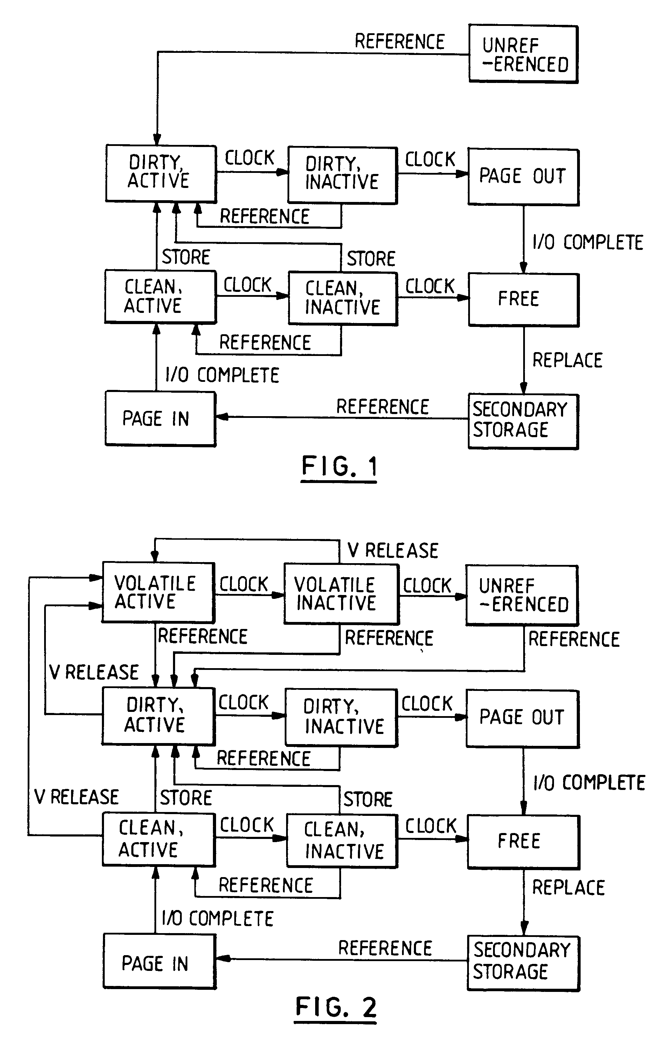

There are other, more unusual, state transitions that were omitted from the diagram of Fig. 1 for clarity. For example, pages on the free list can be reclaimed if they are referenced again before being replaced. Since they are clean, they would go to the CA state. A similar reclaim mechanism allows PO pages to be reclaimed if they are referenced.

Also, there is usually some mechanism for returning page to the UR state. This release operation might be performed when storage is freed, when a program is unloaded, or when a segment's sizes changes.

### The "vrelease" Operation

When an application program is through using a page, it may perform a "vrelease" operation to inform the paging subsystem that it should be released if it is replaced. A vrelease of a page with a frame assigned changes the page state to volatile, active (VA). If the page was in secondary storage, it immediately becomes UR and the secondary storage block is released.

When a VA page is encounted by the clock algorithm, it changes the page state to volatile, inactive (VI). If the page remains VI for an entire cycle, its frame will be reallocated, and the page state becomes UR.

The vrelease operation declares that a virtual storage area's current contents are no longer required. All pages within this area become volatile and they are subject to being discarded without notice. If any of these pages are referenced again, they immediately become non-volatile again. At that moment, they will either contain their original contents or all zeros. Application programs can use this to determine whether the data still remain.

The vrelease operation can be implemented as follows:

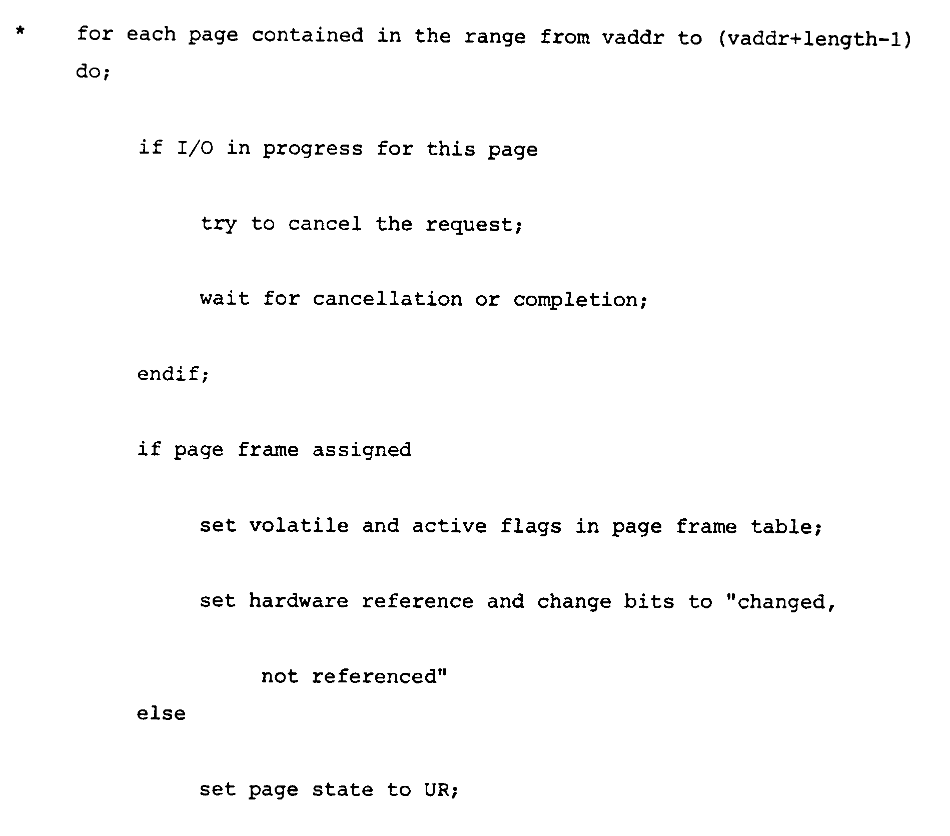

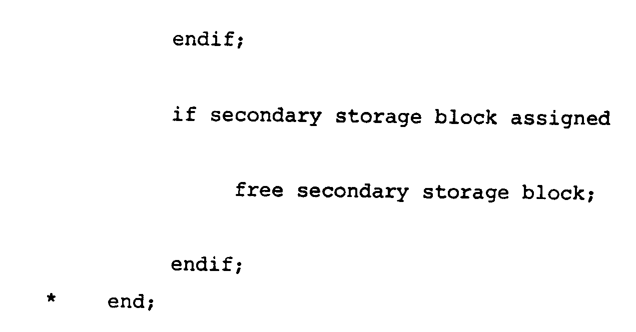

This technique leaves the page in a state that will be changed if any storage operation sets the hardware reference bit. When this bit is set, the volatile and active flags in the page frame table will be ignored. This means that the page state is changed to DA on any reference without the overhead of a page fault interrupt.

### Clock Algorithm Support for Volatile Pages

To use this technique, the clock algorithm must be modified slightly to handle the new volatile page states:

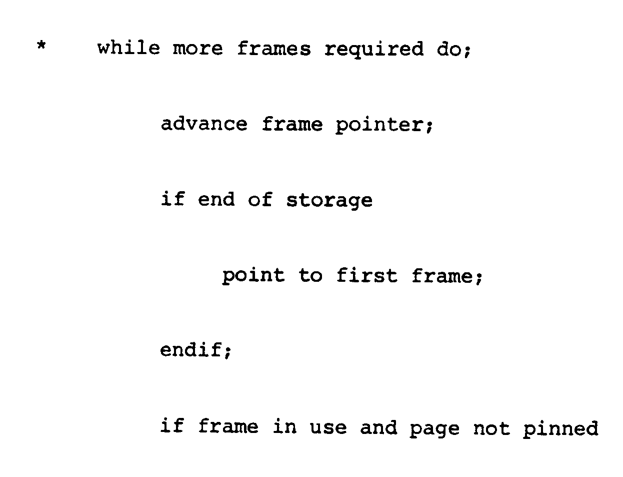

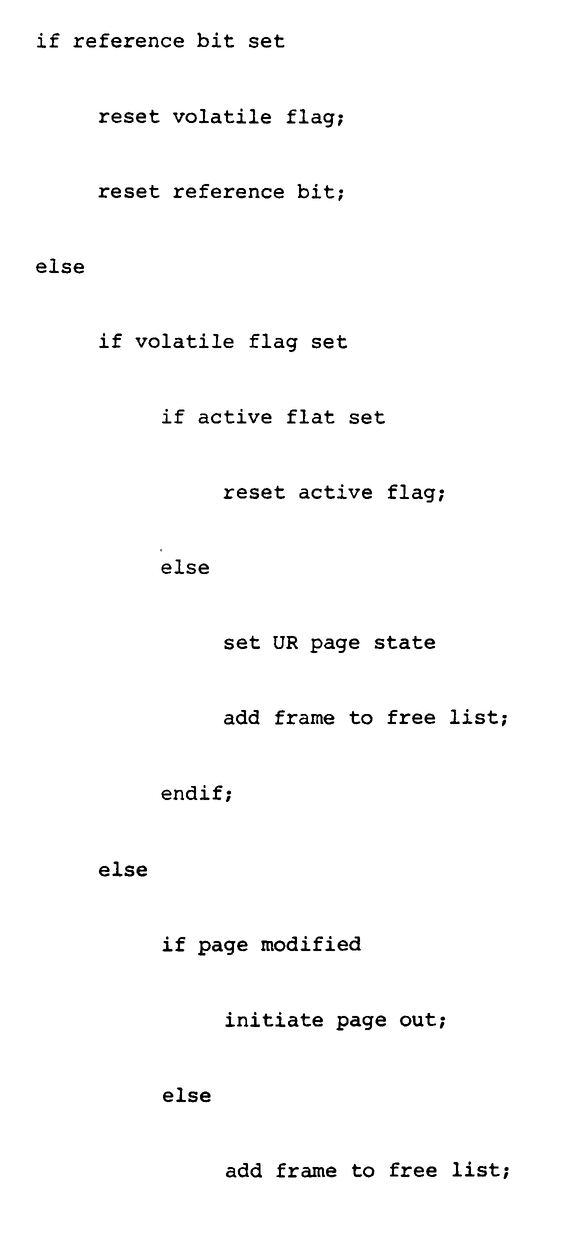

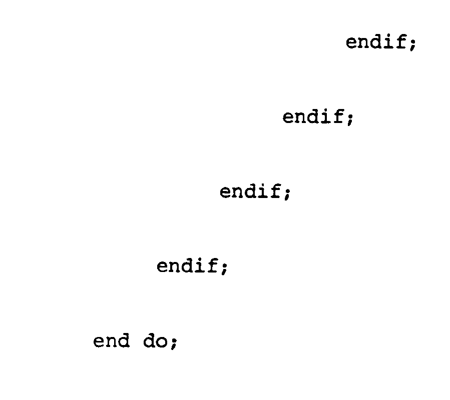

### EXAMPLES

### Dynamic Storage Management

The classic "getmain" and "freemain" operations for dynamic storage allocation can make good use of volatile storage. These system routines dynamically allocate and free variable-sized areas of storage from a heap in the calling process's virtual address space. Similar functions are provided in most systems; other common names are new and dispose, or malloc and free.

When storage is returned to the heap via freemain, and an entire page is no longer allocated, some systems will release the page, putting it in the UR state. This avoids paging out useless information. However, if the page is used again soon, this strategy increases paging subsystem overhead. When the UR page is reused, a page fault interrupt occurs, and a new frame must be allocated. Since this frame may have belonged to another process, its contents must be destroyed. Usually, this is done by clearing it with binary zeros.

This overhead can be avoided by performing a vrelease operation on the freed area. If the page is not reused anytime soon, it will be selected for replacement, and its contents will be discarded. Should a subsequent getmain reuse the page before this occurs, the reference bit will be set and the page will return to the DA state without causing a page fault interrupt. Since the page already belonged to this process, there is no need to destroy its contents. Hence, no time need be spent setting its contents to zero.

### Buffer Management

A problem that arises with many buffer management techniques is that optimisations within the buffer management code may conflict with those made by the virtual storage subsystem. For purposes of the present description, assume that the buffers are allocated in virtual storage and are only pinned while I/O activity is pending. Since pinned pages cannot be selected for replacement, they are a limited resource and must not be abused.

If buffers are allocated from a pool in "least recently used" order, there is danger that a free buffer that has not been used recently may be paged out by the clock algorithm. If this occurs, then when the "oldest" buffer is allocated, its previous contents will be paged in before being thrown away. Because the clock algorithm selects frames for replacement when they have not been referenced recently, it is likely that the next buffer to be allocated will also have been paged out. In such cases, it is quite possible that all subsequent allocations will result in two unnecessary I/O operations: a write to preserve unneeded data followed by a read to get it back.

If the contents of freed buffers are never reused, then a vrelease should be done on each buffer page as soon as it is freed. This prevents the page from being written to secondary storage while avoiding unnecessary page fault interrupts if the buffer is reused while there is still a frame assigned. Used in conjunction with a "most recently used" buffer allocation policy, this scheme minimises paging subsystem overhead for the buffer pool.

When the buffer contents are likely to be reused, they can be managed like a cache. When looking for a cache hit, the buffer page must be inspected to see if some field is non-zero. As long as the buffer does not cross a page boundary, the present volatile storage concept ensures that either the data will all be present or the whole page will be zero. A control field in the same page with the buffer can be used to detect presence, or some non-volatile control block could save the offset of the first non-zero byte (if any) within the data.

If the data come from a device that is slower than paging secondary storage, then it may be appropriate to permit the buffer cache to be paged out. In this case the vrelease is done not when the buffer is freed but when it is reallocated. This eliminates unnecessary page reads in case the previous contents had been paged out, and avoids unnecessary page fault interrupts when there is still a frame assigned.

### Simulation by way of Stepwise Compilation

Stepwise compilation provides an efficient method for simulating the instruction set of one machine on another. This method differs from the conventional simulation technique of decoding an instruction and then branching to a subroutine that performs the appropriate operations on the simulated address space and CPU state. With stepwise compilation, the routine to perform each decoded instruction is tailored to the specific registers and other operands of the simulated instruction and placed into a cell of a "software cache" from which it can be executed directly. Once a cache cell has been built, subsequent re-execution of that instruction need not again incur the decode overhead. Since programs spend much of their time looping, the likelihood of reusing a cached instruction is quite high.

The method described here is the simplest form of simulation using stepwise compilation. There are more complex techniques that involve optimising groups of cached instructions. Some of these methods can also make effective use of a volatile cache, but the additional complexity would confuse the discussions of volatile storage management.

By representing the cache in a volatile segment, the simulator avoids paging system overhead. With most stepwise compilation techniques, it is not worthwhile to swap a cache page to the backing store, since it can be regenerated far more quickly than it can be transferred. Also, the simulator is relieved of the burden of managing its instruction cache. It creates a cache cell whenever it needs one by storing the desired contents into a volatile segment page. If the page is not mapped, a page fault will occur and a new page frame will be assigned.

The simulator depends on referenced pages not disappearing until a "vrelease" is done. Cache entries must not be thrown away while they are being created. Similarly, the cache entry that is currently executing must not suddenly disappear.
Branching to a page, or storing instructions there, will set the hardware reference bit, ensuring that the page will remain until it is vreleased. Whenever the simulated program branches from one cache cell to another, the page being left is vreleased. If it is re-entered in the future, the simulator can always retranslate the cache cell if necessary. It can tell that retranslation is needed when the cell's contents have reverted to zero's.

The paging supervisor is able to manage cache replacement for the simulator in a very effective manner. Since the pager is taking system-wide load and usage factors into account, it is able to select pages for replacement when they begin to interfere with other storage resource requirements. A global page allocation algorithm will optimise system-wide use of real storage, including simulator cache usage as a factor, but may not be "fair" to specific users or tasks. A local page replacement policy can be used if it is important that the large working set of the simulator not impact the real storage available to other system tasks. The paging supervisor is able to make intelligent choices between these conflicting demands because it has a broader view of the requirements of the system as a whole than does the simulator.

If many real storage frames are available, then the cache can be quite large, improving simulator performance by increasing the cache hit ratio. The paging supervisor can limit the number of frames used for the cache based on system-wide working set requirements. This number can be adjusted periodically as the working set changes. The page replacement strategy may choose volatile pages more readily than others, since the cost of replacing them is smaller.

### SUMMARY

Volatile storage has been described and its use illustrated by several examples. The dynamic storage management and buffer management examples showed how volatile storage can reduce paging system overhead. The simulator application takes advantage of the efficiency and data organisation benefits provided by the volatile storage attribute. The trend in microprocessors is towards high CPU speed, large main store, and relatively slow input/output (I/O) access time. This represents a change in the ratios of the relative costs of certain key system components. Significant changes in these cost ratios should be reflected in the system design. Volatile storage helps the system take advantage of processor speed and storage capacity while minimising impact on an already marginal I/O capacity.

There has been described, in a computer system employing a virtual storage memory having pages therein and including a real storage area and a backup storage area, the method of allocating the storage of information between said real storage area and said backup storage area comprising the steps of generating a classification of information stored in said real storage area as volatile storage; and selectively removing said volatile storage information from said real storage area without storing it elsewhere in said system. The method can include the step of identifying portions of said volatile storage which are being accessed by said computer system to prevent removal of said identified volatile storage portions from said real storage area without being restored elsewhere in said system and/or the step of adding reference bits to selected ones of said pages in said real storage area to prevent removal of said selected pages from said real storage without restoring said selected pages elsewhere in said system and/or the step of removing said reference bits from said selected pages to permit removal of said selected pages from said real storage area without being restored elsewhere in said system.

## Claims

1. Data processing apparatus having a cache, comprising a finite set of page frames, and backing storage between which pages of data are paged under the control of a paging supervisor which, inter alia, maintains an inverted page table defining which pages reside in which page frames, a free list of which page frames are available to receive non-resident requested pages and a record of control data indicating the activity that has taken place with respect to each resident page and which supervisor performs on the basis of the control data a cyclic housekeeping function (CLOCK) on the cache to determine, in a first cycle, which resident pages are inactive in that they have not been referenced since last inspected and, of these, which inactive pages have been rendered dirty by being written into, and, in a second cycle, to update the corresponding copies of dirty inactive pages in backing storage and thereafter to transfer the corresponding page frames to the free list, page frames determined to contain clean inactive pages being available for immediate transfer to the free list, wherein means (VRELEASE) are provided for designating that pages in identified page frames are volatile when said pages are no longer required, the paging supervisor being responsive to such designations to remove all control data relative are no longer required, the paging supervisor to such pages from the inverted page table without adding the corresponding page frames to the free list and without updating the corresponding copies thereof in backing storage.

2. Apparatus as claimed in claim 1 wherein the paging supervisor is arranged to progress volatile pages from active to inactive in a first housekeeping cycle and to remove all references to inactive volatile pages in a second housekeeping cycle.

3. Apparatus as claimed in claim 2 wherein means (REFERENCE) are provided for restoring volatile active or inactive pages to the dirty active state when again referenced.

4. Apparatus as claimed in claim 3 wherein means (VRELEASE) are provided for restoring inactive volatile pages to the active volatile state if again specifically designated volatile.

## Patentansprüche

1. Datenverarbeitungseinrichtung mit einem Cache, die aufweist: einen endlichen Satz von Seitenrahmen und einen Rückspeicher, zwischen welchen Datenseiten unter Steuerung einer Seitenüberwachung zu Seiten eingeteilt werden, wobei die Seitenüberwachung unter anderem eine invertierte Seitentabelle aufrecht erhält, die festlegt, welche Seiten sich in welchen Rahmen befinden, eine freie Liste darüber, welche Seitenrahmen verfügbar sind, um noch nicht enthaltene angeforderte Seiten zu empfangen, und einen Datensatz mit Steuerdaten, welche die Handlung anzeigen, die bezüglich jeder enthaltenen Seite stattgefunden hat, wobei die Überwachung auf Basis der Steuerdaten an dem Cache eine zyklische Haushaltsfunktion (CLOCK) ausführt, um in einem ersten Zyklus zu bestimmen, welche enthaltenen Seiten, dadurch, daß darauf seit ihrer letzten Überprüfung nicht verwiesen wurde, inaktiv sind, und welche dieser inaktiven Seiten, dadurch daß sie beschrieben wurden, schlecht sind, und in einem zweiten Zyklus die entsprechenden Kopien der schlechten inaktiven Seiten im Rückspeicher zu erneuern und danach die entsprechenden Seitenrahmen an die freie Liste überzuführen, wobei Seitenrahmen, bei denen festgestellt wurde, daß sie saubere inaktive Seiten enthalten, unmittelbar zum Überführen an die freie Liste verfügbar sind, die mit Mitteln (VRELEASE) zum Anmerken, daß Seiten in erkannten Seitenrahmen flüchtig sind, wenn diese Seiten nicht mehr erforderlich sind, ausgestattet ist, wobei die Seitenüberwachung auf solche Anmerkungen reagiert, um alle Steuerdaten bezüglich solcher Seiten aus der invertierten Seitentabelle zu entfernen, ohne die entsprechenden Seitenrahmen in die freie Liste hinzuzufügen und ohne ihre entsprechenden Kopien im Rückspeicher zu erneuern.

2. Einrichtung nach Anspruch 1, bei welcher die Seitenüberwachung dazu eingerichtet ist, in einem ersten Haushaltszyklus flüchtige Seiten von Aktiven zu Inaktiven überzuführen und in einem zweiten Haushaltszyklus alle Hinweise auf inaktive flüchtige Seiten zu entfernen.

3. Einrichtung nach Anspruch 2, die mit Mitteln (REFERENCE) ausgestattet ist, um den schlechten aktiven Zustand von flüchtigen aktiven oder inaktiven Seiten wiederherzustellen, wenn nochmals darauf verwiesen wird.

4. Einrichtung nach Anspruch 3, die mit Mitteln (VRELEASE) ausgestattet ist, um den aktiven flüchtigen Zustand von inaktiven flüchtigen Seiten wiederherzustellen, wenn sie nochmals definitiv als flüchtig bezeichnet werden.

## Revendications

1. Dispositif informatique ayant une mémoire bloc-notes, comprenant une série finie de cadres de pages, et une mémoire auxiliaire entre lesquelles des pages de données sont paginées sous le contrôle d'un superviseur de pagination, lequel, conserve entre autres une table de pages inversée qui détermine quelles pages résident dans quels cadres de pages, une liste libre de ces cadres de pages qui sont disponibles pour recevoir des pages non-résidentes demandées et un enregistrement de données de commande indiquant les mouvements qui ont eu lieu pour chaque page résidente, lequel superviseur exécute, à partir des données de commande, une fonction cyclique de service (CLOCK) en mémoire bloc-notes afin de déterminer, lors d'un premier cycle, quelles pages résidentes sont inactives du fait qu'elles n'ont pas été référencées depuis le dernier examen et, parmi celles-ci, quelles pages inactives ont été salies par des inscriptions, et, lors d'un second cycle, afin de mettre à jour les copies correspondantes aux pages inactives sales en mémoire auxiliaire et par la suite de transférer les cadres de page correspondants vers la liste libre, les cadres de pages déterminées comme contenant des pages inactives propres étant disponibles pour un transfert immédiat vers la liste libre, dans lequel des moyens (VRELEASE) sont prévus pour désigner quelles pages dans les cadres de pages identifiés sont volatiles lorsque lesdites pages ne sont plus nécessaires, le superviseur de pagination réagissant à de telles désignations afin de supprimer toute donnée de commande relative à de telles pages de la table de pages inversée sans ajouter les cadres de pages correspondants à la liste libre et sans mettre à jour les copies qui y correspondent en mémoire auxiliaire.

2. Dispositif selon la revendication 1 dans lequel le superviseur de pagination est agencé de façon à faire passer les pages volatiles d'actives à inactives lors d'un premier cycle de service et de supprimer toutes les références aux pages volatiles inactives lors d'un second cycle de service.

3. Dispositif selon la revendication 2 dans lequel des moyens (REFERENCE) sont prévus pour remettre les pages volatiles actives ou inactives dans l'état actif sale lorsqu'elles sont référencées à nouveau.

4. Dispositif selon la revendication 3 dans lequel des moyens (VRELEASE) sont prévus pour remettre les pages volatiles inactives dans l'état volatil actif si elles sont de nouveau spécifiquement désignées comme volatiles.
